# EUROPEAN PATENT SPECIFICATION

(11) **EP 2 541 298 B1**
(45) Date of publication and mention of the grant of the patent: **03.07.2019**
(21) Application number: 12161889.6
(22) Date of filing: 28.03.2012
(51) Int. Cl.: G02B 17/08, F21K 9/60, F21V 5/00, F21V 7/00, F21Y 115/10

(54) **Optical element and illuminant device using the same**
Optische Element und Lichtquellenvorrichtung damit
Élément optique et dispositif d'éclairage l'utilisant

(30) Priority: 30.06.2011 TW 100211983
(43) Date of publication of application: 02.01.2013
(73) Proprietor: Chun Kuang Optics Corp, Hsinchu County (TW)
(72) Inventor: Huang, Hsin-Chieh, 303 Hukou Township Hsinchu County (TW); Yen, Chia-Song, 303 Hukou Township Hsinchu County (TW); Teng, Shun-Wen, 303 Hukou Township Hsinchu County (TW)
(74) Representative: 2K Patentanwälte Blasberg Kewitz & Reichel

(56) References cited:
- EP-A2- 1 698 824
- WO-A2-2009/069894
- FR-A1- 2 858 682
- US-A1- 2004 012 976
- US-A1- 2004 208 019
- US-A1- 2006 067 640
- US-A1- 2006 126 343
- US-A1- 2006 193 137
- US-A1- 2007 115 674
- US-A1- 2011 140 147

## Description

### Field of the Invention

The present invention generally relates to an optical element, and relates in particular to an illuminant device comprising an optical element having an enlarged light emitting angle.

### Description of Prior Art

A light emitting diode (LED) is a kind of semiconductor device, which exploits the property of direct-bandgap semiconductor material to convert electric energy into light energy efficiently and has the advantages of long service time, high stability and low power consumption and is developed to replace the traditional non- directivity light tube and incandescent lamp.

The LED is a point-like light source and has high directivity so that the lighting surface of the LED is narrower than that of the traditional light sources, and the luminous intensity of the LED is gradually reduced while the lighting distance is increased, so that the LED is more suitable for providing a short-distance and small area lighting, such as in the case of a table lamp.

In order to solve the mentioned problem, many manufacturers assemble and arrange multiple LEDs to centralize light for solving the problem of narrow lighting range. However, the required power for driving the LEDs is increased when the number of the LEDs is increased. Therefore, the effect of saving energy cannot be achieved. Moreover, the price of an LED lamp is much higher than that of the traditional light source, which reduces the willingness of using an LED lamp.

US 2011/140147 A discloses an illuminant device according to the preamble of claim 1 and relates to an LED unit which includes an LED and a lens mounted on the LED. The lens includes a light-incident face adjacent to the LED, a light-emergent face remote from the LED, and a light-reflecting face between the light-incident face and the light-emergent face. The light-incident face includes a first light-incident face facing the LED, and the light-emergent face includes a first light-emergent face located opposite to the first light-incident face. The first light-incident face is a continuously curved face which has a curvature, along a bottom-to-top direction of the lens, firstly decreasing gradually to a first value; then increasing gradually to a second value; then decreasing gradually again to a third value; and then increasing gradually again. The light-emergent face has a first light-emergent face located above the first light-incident face and having a varied curvature. However, US 2011/140147 A does not disclose an extending part comprising multiple light guiding strips connected together.

### SUMMARY OF THE INVENTION

It is an object of the present invention to provide an illuminant device enabling a better control of the emitted light.

This problem is solved by an illuminant device as claimed in claim 1. Further advantageous embodiments are the subject-matter of the dependent claims.

According to the present invention the optical element can effectively enlarge the emitting angle of light passing through the optical element. Accordingly, the illuminant device according to the present invention can provide light with large emitting angle.

In the illuminant device according to the present invention the optical element uses the extending part which is extended from the circumference of the top surface to guide the light entering the optical element so that the light can be refracted by the extending part or reflected to the light-emitting surface and emitted from the light-emitting surface to enlarge the light-emitting angle of light passed through the optical element. Moreover, by changing an included angle formed between the light-emitting surface and the bottom surface according to the present invention it is possible to provide different forms of luminous intensity distribution such that the optical element can be applied in different fields of lighting.

### BRIEF DESCRIPTION OF DRAWINGS

The features of the invention believed to be novel are set forth with particularity in the appended claims. The invention itself, however, may be best understood by reference to the following detailed description of the invention, which describes an exemplary embodiment of the invention, taken in conjunction with the accompanying drawings, in which:
Fig. 1 is a perspective view of an optical element for use in an illuminant device according to a first preferred embodiment of the present invention;
Fig. 2 is another perspective view of the optical element of Fig. 1;
Fig. 3 is a sectional view of the optical element of Fig. 1;
Fig. 4 is a schematic view of the luminous intensity distribution of the optical element of Fig. 1;
Fig. 5 is a sectional view of an illuminant device according to the present invention, comprising the optical element of Fig. 1;
Fig. 6 is a sectional view of an optical element for use in an illuminant device according to a second preferred embodiment of the present invention;
Fig. 7 is a sectional view of an optical element for use in an illuminant device according to a third preferred embodiment of the present invention;
Fig. 8 is a schematic view of the luminous intensity distribution of an illuminant device according to the present invention;
Fig. 9 is a perspective view of an optical element for use in an illuminant device according to a fourth preferred embodiment of the present invention;
Fig. 10 is a sectional view of the optical element of Fig. 9;
Fig. 11 is a perspective view of an optical element for use in an illuminant device according to a fifth preferred embodiment of the present invention;
Fig. 12 is a sectional view of the optical element of Fig. 11;
Fig. 13 is a perspective view of an optical element for use in an illuminant device according to a further embodiment that serves for a better understanding of the present invention; and
Fig. 14 is a sectional view of the optical element of Fig. 13 that serves for a better understanding of the present invention.

### DETAILED DESCRIPTION OF THE INVENTION

A preferred embodiment of the present invention will be described hereinafter with reference to the drawings.

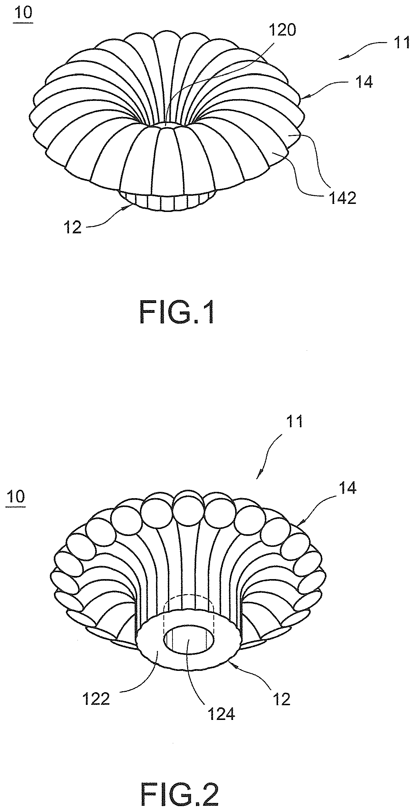

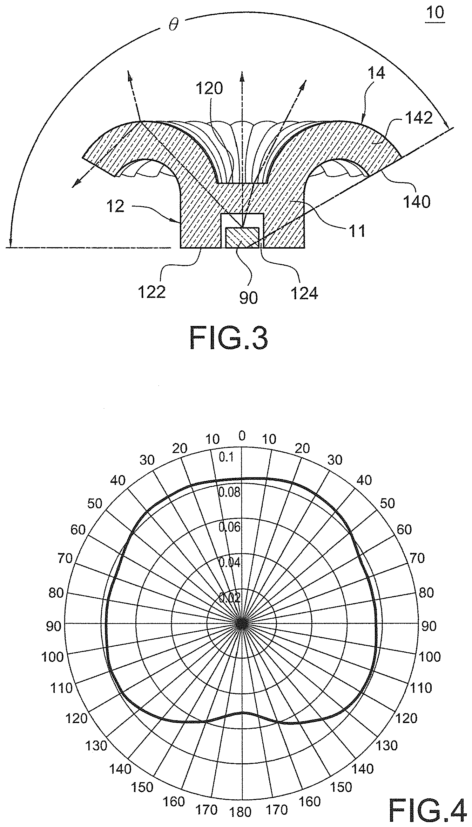

Reference is made to Fig. 1 and Fig. 2, which are perspective views from different view angles of an optical element for use in an illuminant device according to a first preferred embodiment of the present invention. In use, the optical element 10 is disposed on a light emitting diode (LED) 90 (cf. Fig. 3) such that the luminous intensity distribution of light emitted by the LED 90 can be changed and the emitting angle of the light can be enlarged. The LED 90 is, but not limited to, a LED chip, other equivalent elements can be used without departing from the scope of the present invention.

The optical element 10 can be integrally-formed by plastic, glass, silicon rubber, silicon resin or other light transparent material by injection molding. The optical element 10 has a transparent main body 11. The main body 11 includes a light guiding pillar 12 and an extending part 14. In this embodiment, the light guiding pillar 12 is, but not limited to, a cylinder. In the practical application, the light guiding pillar can be a triangular prism, a tetragonal prism or polygonal prisms. The light guiding pillar 12 has a top surface 120 and a bottom surface 122 opposite to the top surface 120. The bottom surface 122 is designed as a plane and has a recess 124. In this embodiment, the recess 124 disposed on the central of the bottom surface 122 is concave toward the top surface 120 and an opening of the recess 124 is of circular shape. In the practical application, the opening can be of any geometric form. The LED 90 is disposed on the recess 124 and emits light to the optical element 10.

The extending part 14 having a plurality of light guiding strips 142 is connected to the light guiding pillar 12 and extended from the circumference of the top surface 120. Multiple light-emitting surfaces 140 are disposed on the end of the light guiding strips 142. An included angle θ is formed between the light-emitting surface 140 and the bottom surface 122. In this embodiment, the included angle θ is an obtuse angle, which is larger than ninety degrees.

In the practical application, the LED 90 is disposed in the recess 124 and emits light to the optical element 10. The light is guided by the light guiding pillar 12 and emitted from the top surface 120 and the extending part 14 by refraction or emitted from the light-emitting surface 140 by reflection by the extending part 14. The extending part 14 can effectively guide light to the light-emitting surface 140 to enhance the light-emitting angle. The luminous intensity distribution of the optical element 10 is shown in Fig. 4.

Reference is made to Fig. 4, which is a schematic view of the luminous intensity distribution of the optical element of Figs. 1 to 3. The luminous intensity of the light passed through the optical element 10 distributes in 180 degrees from both sides of the optical axis. More particularly, the luminous intensity has uniform distribution between 0 and 130 degrees and the luminous intensity between 130 and 180 degrees is larger than the 5 percent of the total luminous intensity. As shows in Fig. 4, the optical element 10 can effectively enlarge the emitting angle of the light and enhance the uniformity of light.

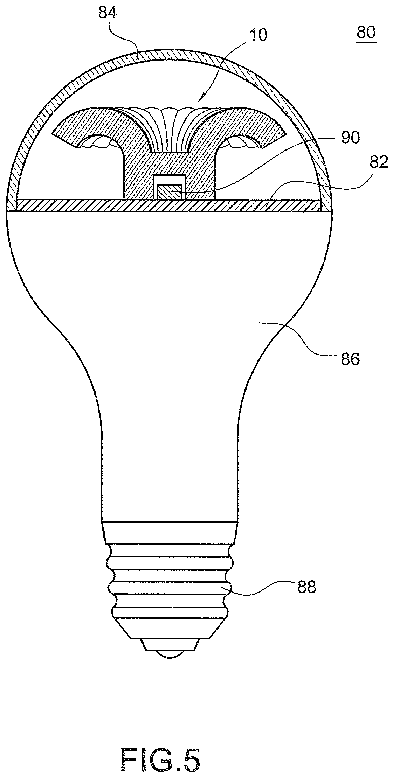

Reference is made to Fig. 5, which is a sectional view of an illuminant device according to the present invention. The illuminant device 80 further includes a circuit board 82, an LED 90, an optical element 10, a cover 84, a heat sink element 86 and a conductive connector 88. The LED 90 is disposed on the circuit board 82 and electrically connected thereto. In this embodiment, the circuit board 82 is provided with conductive traces (not shown) and soldering pads (not shown) thereon to mount the LED 90. The LED 90 is, but not limited to, an LED chip.

The optical element 10 is disposed on the circuit board 82 and located on the LED 90. With reference again to Fig. 3, the optical element 10 has a transparent main body 11 including a light guide pillar 12 and an extending part 14. The light guide pillar 12 is, but not limited to, a cylinder. The light guide pillar 12 has a top surface 120 and a bottom surface 122. The bottom surface 122 is a plane and has a recess 124. In this embodiment, the recess 124 disposed on the central of the bottom surface 122 is concave toward the top surface 120 and an opening of the recess 124 is, but not limited to, of circular shape. The LED 90 is disposed on the recess 124 and emits light to the optical element 10. The extending part 14 having a plurality of light guiding strips 142 is connected to the light guiding pillar 12 and extended from the circumference of the top surface 120. Multiple light-emitting surfaces 140 are disposed on the end of the light guiding strips 142. An included angle θ is formed between the light-emitting surface 140 and the bottom surface 122. In this embodiment, the included angle θ is an obtuse angle, which is larger than ninety degrees.

With reference again to Fig. 5, the cover 84 is formed by a light transparent material, and can be designed as transparent form or must form. The cover 84 encloses the circuit board 82, on which the LED 90 and the optical element 10 are disposed, to prevent dust from entering the circuit board 84 and prevent moisture from permeating into the illuminant device 80, thus enhancing the light efficiency and prolonging the lifetime of the illuminant device 80.

The heat sink element 86 is assembled with the cover 84 such that the circuit board 82, the LED 90 and the optical element 10 are arranged between the cover 84 and the heat sink element 86. The heat sink element 86 can be made of a material enabling a fast dissipation of heat generated by the LED 90.

The conductive connector 88 is assembled to one side of the heat sink element 86, which is opposite to the cover 84, and is electrically connected to the circuit board 82. The conductive connector 88 can be, but not limited to, a E26 connector or E27 connector. The conductive connector 88 is adapted to be connected into the socket of ordinary lamp and electrically connected to an external power. The power is transmitted to the circuit board 82 through the conductive connector 88 to supply power to the LED 90. The light emitted from the LED 90 is transmitted to the top surface 120 and the extending part 14 and is emitted from the top surface 120 or extending part 14 by refraction or is emitted from the light-emitting surface 140 by reflection by the extending part 14.

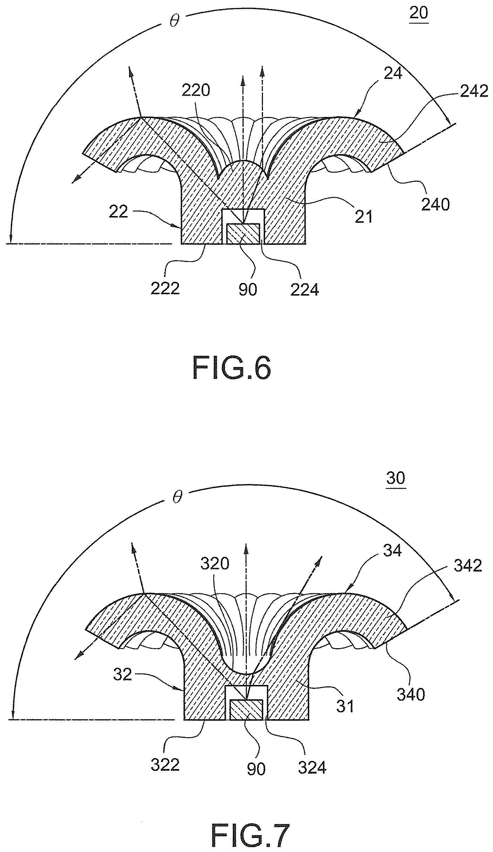

Reference is made to Fig. 6, which is a sectional view of an optical element for use in an illuminant device according to a second preferred embodiment of the present invention. The optical element 20 has a transparent main body 21 and the main body 21 includes a light guide pillar 22 and an extending part 24. The light guiding pillar 22 is, but not limited to, a circular pillar. The light guiding pillar 22 has a top surface 220 and a bottom surface 222 opposite to the top surface 220. The top surface 220 is convex toward a direction which is opposite the bottom surface 222, and the top surface 220 is, but not limited to, of arc convex shape, which can effectively enhance the uniformity of light emitted by the top surface 220. The bottom surface 222 is a plane and has a recess 224. The recess 224 disposed on the central of the bottom surface 222 is concave toward the top surface 220 and an opening of the recess 224 is, but not limited to, of circular shape.

The extending part 24 having a plurality of light guiding strips 242 is connected to the light guiding pillar 22 and extended from the circumference of the top surface 220. Multiple light-emitting surfaces 240 are disposed on the end of the light guiding strips 242. An included angle θ is formed between the light-emitting surface 240 and the bottom surface 222. In this embodiment, the included angle θ is an obtuse angle, which is larger than ninety degrees.

The LED 90 is disposed on the recess 224 and emits light to the optical element 20. The light is transmitted to the top surface 220 and the extending part 24 and emitted from the top surface 220 or extending part 24 by refraction or emitted from the light-emitting surface 240 through reflection by the extending part 24.

Reference is made to Fig. 7, which is a sectional view of an optical element for use in an illuminant device according to a third preferred embodiment of the present invention. The optical element 30 has a transparent main body 31 and the main body 31 includes a light guide pillar 32 and an extending part 34. The light guide pillar 32 is, but not limited to, a circular pillar. The light guiding pillar 32 has a top surface 320 and a bottom surface 322 opposite to the top surface 320. The top surface 320 is concave toward the bottom surface 322 such that divergent light passes through and the top surface 320 is, but not limited to, of arc concave shape. The bottom surface 322 is a plane and has a recess 324. The recess 324 disposed in the central portion of the bottom surface 322 is concave toward the top surface 320 and an opening of the recess 324 is, but not limited to, of circular shape.

The extending part 34 having a plurality of light guiding strips 342 is connected to the light guiding pillar 32 and extended from the circumference of the top surface 320. Multiple light-emitting surfaces 340 are disposed on the end of the light guiding strips 342. An included angle θ is formed between the light-emitting surface 340 and the bottom surface 322. In this embodiment, the included angle θ is an obtuse angle, which is larger than ninety degrees.

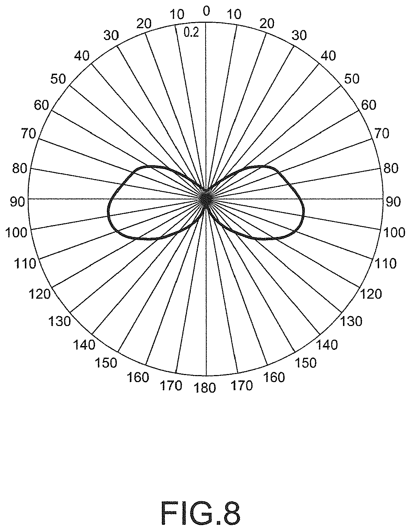

The LED 90 is disposed on the recess 324 of the optical element 30. A part of the light emitted by the LED 90 and entering the optical element 30 is emitted from the top surface 320, and the top surface 320 diverges the light. Another part of the light emitted by the LED 90 and entering the optical element 30 is emitted from the extending part 34 by refraction or emitted from the light-emitting surface 340 through reflection by the extending part 34. The luminous intensity distribution of the optical element 30 is shown in Fig. 8, and the light focus is at an inclined direction about 50 to 130 degrees at both side of an optical axis.

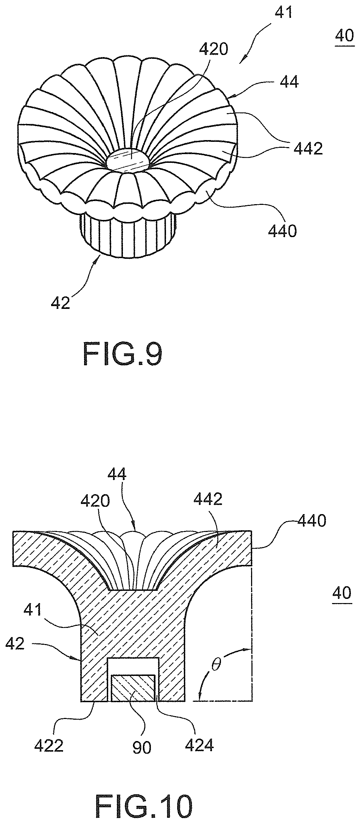

Reference is made to Fig. 9 and Fig. 10, which are respectively a perspective view and a sectional view of an optical element for use in an illuminant device according to the fourth preferred embodiment of the present invention. The optical element 40 has a transparent main body 41 including a light guide pillar 42 and an extending part 44. The light guiding pillar 42 is, but not limited to, a cylinder. The light guiding pillar 42 has a top surface 420 and a bottom surface 422 opposite to the top surface 420. The bottom surface 422 is a plane and has a recess 424. The recess 424 disposed on the central portion of the bottom surface 422 is concave toward the top surface 420 and an opening of the recess 424 is, but not limited to, of circular shape. In this embodiment, the top surface 420 is a plane and is substantially parallel to the bottom surface 422. In the practical application, the top surface 420 can be a convex surface to enhance the uniformity of the light passing through or a concave surface to converge the light passing through.

The extending part 44 having a plurality of light guiding strips 442 is connected to the light guiding pillar 42 and extended from the circumference of the top surface 420. Multiple light-emitting surfaces 440 are disposed on the end of the light guiding strips 442. An included angle θ is formed between the light-emitting surface 440 and the bottom surface 422. In this embodiment, the included angle θ is a right angle, which is equal to ninety degrees.

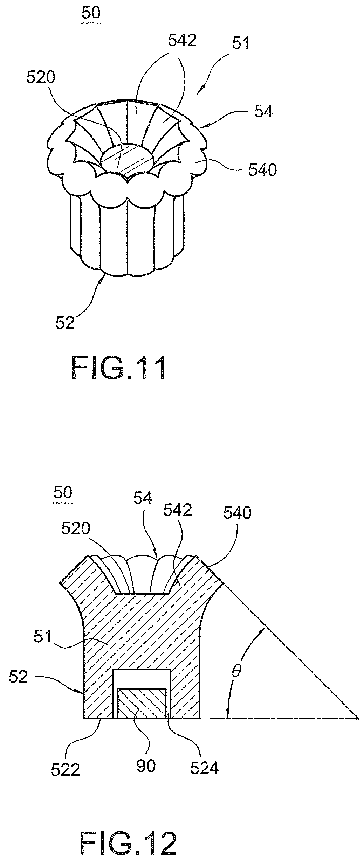

Reference is made to Fig. 11 and Fig. 12, which are respectively a perspective view and a sectional view of an optical element for use in an illuminant device according to the fifth preferred embodiment of the present invention. The optical element 50 has a transparent main body 51 including a light guiding pillar 52 and an extending part 54. The light guiding pillar 52 is, but not limited to, a cylinder. The light guiding pillar 52 has a top surface 520 and a bottom surface 522 opposite to the top surface 520. The bottom surface 522 is a plane and has a recess 524. The recess 524 disposed on the central portion of the bottom surface 522 is concave toward the top surface 520 and an opening of the recess 524 is, but not limited to, of circular shape. In this embodiment, the top surface 520 is a plane and is substantially parallel to the bottom surface 522. In the practical application, the top surface 520 can be a convex surface to enhance the uniformity of the light passed through or a concave surface to converge the light passed through.

The extending part 54 having a plurality of light guiding strips 542 is connected to the light guiding pillar 52 and extended from the circumference of the top surface 520. Multiple light-emitting surfaces 540 are disposed on the end of the light guiding strips 542. An included angle θ is formed between the light-emitting surface 540 and the bottom surface 522. In this embodiment, the included angle θ is an acute angle, which is smaller than ninety degrees.

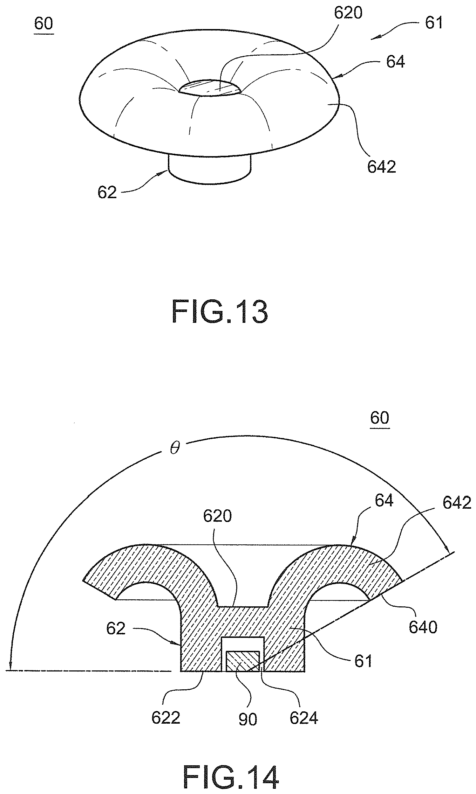

Reference is made to Fig. 13 and Fig. 14, which are respectively a perspective view and a sectional view of an optical element for use in an illuminant device according to a further embodiment that shall serve for a better understanding of the present invention. The optical element 60 has a transparent main body 61 including a light guiding pillar 62 and an extending part 64. The light guiding pillar 62 is, but not limited to, a cylinder. The light guiding pillar 62 has a top surface 620 and a bottom surface 622 opposite to the top surface 620. The bottom surface 622 is a plane and has a recess 624. The recess 624 disposed on the central portion of the bottom surface 622 is concave toward the top surface 620 and an opening of the recess 624 is, but not limited to, of circular shape. In this embodiment, the top surface 620 is a plane and is substantially parallel to the bottom surface 622. In the practical application, the top surface 620 can be a convex surface to enhance the uniformity of the light passed through or a concave surface to converge the light passed through.

The extending part 64 is extended from the circumference of the top surface 620. A light-emitting surface 640 is disposed on the end of the extending part 64. An included angle θ is formed between the light-emitting surface 640 and the bottom surface 622. In this embodiment, the included angle θ is an obtuse angle, which is larger than ninety degrees. In the practical application, the included angle θ can be a right angle or an acute angle for adjusting the light-emitting angle. The LED 90 is disposed on the recess 624 and emits light to the optical element 60.

To sum up, in the present invention, the optical element uses the extending part which is extended from the circumference of the top surface to guide the light entering the optical element so that the light can be refracted by the extending part or reflected to the light-emitting surface and emitted from the light-emitting surface to enlarge the light-emitting angle of light passing through the optical element. Moreover, by changing an included angle formed between the light-emitting surface and the bottom surface different forms of luminous intensity distributions can be formed such that the optical element can be applied in different fields of lighting.

## Claims

1. An illuminant device, comprising an optical element (10, 20, 30, 40, 50) assembled with a light emitting diode (LED) (90) to form said illuminant device, wherein the optical element comprises:
a transparent main body (11, 21, 31, 41, 51) comprising:
a light guiding pillar (12, 22, 32, 42, 52) having a top surface (120, 220, 320, 420, 520) and a bottom surface (122, 222, 322, 422, 522) opposite to the top surface (120, 220, 320, 420, 520), wherein the bottom surface (122, 222, 322, 422, 522) has a recess (124,224, 324, 424, 524); and
an extending part (14, 24, 34, 44, 54) extended from the circumference of the top surface (120, 220, 320, 420, 520), wherein an end of the extending part (14, 24, 34, 44, 54) has at least a light-emitting surface (140, 240, 340, 440, 540);
wherein the LED (90) is disposed in the recess (124, 224, 324, 424, 524) and emits light to the optical element (10, 20, 30, 40, 50),
**characterised in that** the extending part (14, 24, 34, 44, 54) comprises multiple light guiding strips (142, 242, 342, 442, 542) that are identical and connected together, wherein
the light guiding strips (142, 242, 342, 442, 542) have a circular cross-section or form a sequence of convexely curved portions on an upper and opposite bottom side of said end of the extending part (14, 24, 34, 44, 54), and
the light emitted from the LED (90) is guided by the light guiding pillar (12, 22, 32, 42, 52) and is emitted from the top surface (120, 220, 320, 420, 520) and the extending part (14, 24, 34, 44, 54) by refraction or is guided to the light-emitting surface (140, 240, 340, 440, 540) by reflection in the extending part (14, 24, 34, 44, 54) and emitted from the light-emitting surface (140, 240, 340, 440, 540).

2. The illuminant device as claimed in claim 1, wherein an included angle (θ) formed between the light-emitting surface (140, 240, 340, 440, 540) and the bottom surface (122, 222, 322, 422, 522) is an obtuse angle being larger than ninety degrees.

3. The illuminant device as claimed in claim 1, wherein an included angle (θ) formed between the light-emitting surface (140, 240, 340, 440, 540) and the bottom surface (122, 222, 322, 422, 522) is a right angle being equal to ninety degrees.

4. The illuminant device as claimed in claim 1, wherein an included angle (θ) formed between the light-emitting surface (140, 240, 340, 440, 540) and the bottom surface (122, 222, 322, 422, 522) is an acute angle being smaller than ninety degrees.

5. The illuminant device as claimed in any of the preceding claims, wherein the top surface (120, 220, 320, 420, 520) is a plane.

6. The illuminant device as claimed in any of claims 1 to 4, wherein the top surface (120, 220, 320, 420, 520) is a convex or concave.

7. The illuminant device as claimed in any of the preceding claims, further comprising:
a circuit board (82), a cover (84) and a heat sink element (86), wherein
the light emitting diode (LED) (90) is disposed on the circuit board (82),
the cover (84) is made of transparent material, and
the heat sink element (86) is assembled with the cover (84) such that the LED (90) and the optical element (10, 20, 30, 40, 50) are arranged between the cover (84) and the heat sink element (86).

8. The illuminant device as claimed in claim 7, further comprising a conductive connector (88) assembled to one side of the heat sink element (86), which is opposite to the cover (84), wherein the conductive connector (88) is electrically connected to the circuit board (82).

## Patentansprüche

1. Leuchtmittel-Vorrichtung, umfassend ein optisches Element (10, 20, 30, 40, 50), das mit einer Leuchtdiode (LED) (90) zum Ausbilden der Leuchtmittel-Vorrichtung zusammengesetzt ist, wobei das optische Element umfasst:
einen transparenten Hauptkörper (11, 21, 31, 41, 51), umfassend:
eine lichtleitende Säule (12, 22, 32, 42, 52) mit einer Oberseite (120, 220, 320, 420, 520) und einer Unterseite (122, 222, 322, 422, 522), die der Oberseite (120, 220, 320, 420, 520) gegenüber liegt, wobei die Unterseite (122, 222, 322, 422, 522) eine Ausnehmung (124, 224, 324, 424, 524) aufweist; und
einen Verlängerungsteil (14, 24, 34, 44, 54), der sich vom Umfang der Oberseite (120, 220, 320, 420, 520) aus erstreckt, wobei ein Ende des Verlängerungsteils (14, 24, 34, 44, 54) mindestens eine lichtemittierende Oberfläche (140, 240, 340, 440, 540) aufweist;
wobei die LED (90) in der Ausnehmung (124, 224, 324, 324, 424, 524) angeordnet ist und Licht an das optische Element (10, 20, 30, 40, 50) abgibt,
**dadurch gekennzeichnet, dass** das Verlängerungsteil (14, 24, 34, 44, 54) mehrere lichtleitende Streifen (142, 242, 342, 442, 542) aufweist, die identisch und miteinander verbunden sind, wobei
die lichtleitenden Streifen (142, 242, 342, 442, 542) einen kreisförmigen Querschnitt aufweisen oder eine Folge von konvex gekrümmten Abschnitten auf einer oberen und gegenüberliegenden unteren Seite des Endes des sich Verlängerungsteils (14, 24, 34, 44, 54) ausbilden, und
das von der LED (90) abgegebene Licht von der lichtleitenden Säule (12, 22, 32,42, 52) geführt und von der Oberseite (120, 220, 320, 420, 520) und dem Verlängerungsteil (14, 24, 34, 44, 54) durch Lichtbrechung abgegeben wird oder durch Reflexion in dem Verlängerungsteil (14, 24, 34, 44, 54) auf die lichtemittierende Oberfläche (140, 240, 340, 440, 540) geleitet wird und von der lichtemittierenden Oberfläche (140, 240, 340, 440, 540) emittiert wird.

2. Leuchtmittel-Vorrichtung nach Anspruch 1, wobei ein eingeschlossener Winkel (θ), der zwischen der lichtemittierenden Oberfläche (140, 240, 340, 440, 540) und der Unterseite (122, 222, 322, 422, 522) gebildet ist, ein stumpfer Winkel ist, der größer als neunzig Grad ist.

3. Leuchtmittel-Vorrichtung nach Anspruch 1, wobei ein eingeschlossener Winkel (θ), der zwischen der lichtemittierenden Oberfläche (140, 240, 340, 440, 540) und der Unterseite (122, 222, 322, 422, 522) gebildet ist, ein rechter Winkel ist, der gleich neunzig Grad ist.

4. Leuchtmittel-Vorrichtung nach Anspruch 1. wobei ein eingeschlossener Winkel (θ), der zwischen der lichtemittierenden Oberfläche (140, 240, 340, 440, 540) und der Unterseite (122, 222, 322, 422, 522) gebildet ist, ein spitzer Winkel ist, der kleiner als neunzig Grad ist.

5. Leuchtmittel-Vorrichtung nach einem der vorhergehenden Ansprüche, wobei die Oberseite (120, 220, 32D, 420, 520) eine Ebene ist.

6. Leuchtmittel-Vorrichtung nach einem der Ansprüche 1 bis 4, wobei die Oberseite (120, 220, 320, 420, 520) eine konvexe oder konkave Fläche ist.

7. Leuchtmittel-Vorrichtung nach einem der vorhergehenden Ansprüche, weiterhin umfassend:
eine Leiterplatte (82), eine Abdeckung (84) und ein Kühlkörper-Element (86), wobei die Leuchtdiode (LED) (90) auf der Leiterplatte (82) angeordnet ist,
die Abdeckung (84) aus einem transparenten Material hergestellt ist, und
das Kühlkörper-Element (86) mit der Abdeckung (84) so zusammengesetzt ist, dass die LED (90) und das optische Element (10, 20, 30, 40, 50) zwischen der Abdeckung (84) und dem Kühlkörper-Element (86) angeordnet sind.

8. Leuchtmittel-Vorrichtung nach Anspruch 7, weiterhin umfassend einen leitenden Verbinder (88), der auf einer Seite des Kühlkörper-Elements (86) montiert ist, die der Abdeckung (84) gegenüberliegt, wobei der leitende Verbinder (88) elektrisch mit der Leiterplatte (82) verbunden ist.

## Revendications

1. Un dispositif illuminant, comprenant un élément optique (10, 20, 30, 40, 50) assemblé avec une diode électroluminescente (DEL) (90) pour former ledit dispositif illuminant, dans lequel l'élément optique comporte :
un corps principal transparent (11,21,31,41,51), comprenant:
un pilier de guidage de lumière (12, 22, 32, 42, 52) ayant une surface supérieure (120, 220, 320 , 420, 520) et une surface de fond (122, 222, 322, 422, 522) opposée à la surface supérieure (120, 220, 320, 420, 520), dans lequel la surface de fond (122, 222, 322, 422, 522) a un évidement (124, 224, 324, 424, 524); et
une partie en extension (14, 24, 34, 44, 54) partant de la circonférence de la surface supérieure (120, 220, 320, 420, 520), dans laquelle une extrémité de la partie en extension (14, 24, 34, 44, 54) a au moins une surface luminescente (140, 240, 340, 440, 540);
dans lequel la DEL (90) est disposée dans l'évidement (124, 224, 324, 424, 524) et émet de la lumière vers l'élément optique (10, 20, 30, 40, 50),
**caractérisé en ce que** la partie en extension (14, 24, 34, 44, 54) comporte de multiples bandes de guidage de lumière (142, 242, 342, 442, 542) qui sont identiques et connectées ensemble, dans lequel
les bandes de guidage de lumière (142, 242, 342, 442, 542) présentent une section en coupe circulaire ou forment une séquence de parties courbes convexes sur un côté supérieur et inférieur opposé de ladite extrémité de la partie en extension (14, 24, 34, 44, 54), et
la lumière émise par la DEL (90) est guidée par le pilier de guidage de lumière (12, 22, 32, 42, 52) et est émise par la surface supérieure (120, 220, 320, 420, 520) et par la partie en extension (14, 24, 34, 44, 54) par réfraction ou est guidée vers la surface émettrice de lumière (140, 240, 340, 440, 540) par réflexion dans la partie en extension (14, 24, 34, 44, 54) et est émise par la surface émettrice de lumière (140, 240, 340, 440, 540).

2. Le dispositif illuminant tel que revendiqué dans la revendication 1, dans lequel un angle inclus (θ) formé entre la surface émettrice de lumière (140, 240, 340, 440, 540) et la surface de fond (122, 222, 322, 422, 522) est un angle obtus supérieur à quatre-vingt-dix degrés.

3. Le dispositif illuminant tel que revendiqué dans la revendication 1, dans lequel un angle inclus (θ) formé entre la surface émettrice de lumière (140, 240, 340, 440, 540) et la surface de fond (122, 222, 322, 422, 522) est un angle droit égal à quatre-vingt-dix degrés.

4. Le dispositif illuminant tel que revendiqué dans la revendication 1, dans lequel un angle inclus (θ) formé entre la surface émettrice de lumière (140, 240, 340, 440, 540) et le fond la surface (122, 222, 322, 422, 522) est un angle aigu inférieur à quatre-vingt-dix degrés.

5. Le dispositif illuminant tel que revendiqué dans l'une quelconque des revendications précédentes, dans lequel la surface supérieure (120, 220, 320, 420, 520) est un plan.

6. Le dispositif illuminant tel que revendiqué dans l'une quelconque des revendications 1 à 4, dans lequel la surface supérieure (120, 220, 320, 420, 520) est convexe ou concave.

7. Le dispositif illuminant tel que revendiqué dans l'une quelconque des revendications précédentes, comprenant en outre:
une carte de circuit imprimé (82); un couvercle (84) et un élément de dissipation de chaleur (86), dans lequel
la diode électroluminescente (DEL) (90) est disposée sur la carte de circuit imprimé (82);
le couvercle (84) est réalisé en matériau transparent, et
l'élément dissipateur de chaleur (86) est assemblé avec le couvercle (84) de telle sorte que la diode électroluminescente (90) et l'élément optique (10, 20, 30, 40, 50) soient disposés entre le couvercle (84) et l'élément dissipateur de chaleur.

8. Le dispositif illuminant tel que revendiqué dans la revendication 7, comprenant en outre connecteur conducteur (88) assemblé sur un côté de l'élément dissipateur de chaleur (86), qui est opposé au couvercle (84), dans lequel le connecteur conducteur (88) est électriquement à la carte de circuit imprimé (82).
